# EUROPEAN PATENT APPLICATION

(11) **EP 0 838 933 A1**
(43) Date of publication of application: **29.04.1998**
(21) Application number: 97480072.4
(22) Date of filing: 16.10.1997
(51) Int. Cl.: H04L 29/06

(54) **Method and apparatus for access level control in a metropolitan aera network**

(30) Priority: 24.10.1996 US 740062
(71) Applicant: INTERNATIONAL BUSINESS MACHINES CORPORATION, Armonk, NY 10504 (US)
(72) Inventor: Doreen, Revis R., Durham, NC 27713 (US)
(74) Representative: Therias, Philippe

(57) **Abstract**

Apparatus and method for using an access level portion of an address to control the level of access for subscribers in a metropolitan area network. The address is assigned to the subscriber terminal either dynamically by the network head-end, or is permanently assigned. The network head-end controls which of various services are offered to subscribers based on the access level portion of the address. If a subscriber's identity mandates a different level of access than dictated by the access level portion, an address filter is installed by the network head-end. The invention lends itself to use in an internet protocol based metropolitan area network of the type that makes use of the cable TV system.

## Description

### Background

### Field of the Invention

This invention relates to control of the level of access of multiple subscribers in a network, without depending on network topology for such control. The invention can be used in any of a variety of types of networks; however, it is particularly suited for use in a metropolitan area network (MAN). In its preferred embodiment, the invention is used in a MAN which operates over a cable television system.

### Definition of the Problem

With the growth of the Internet and personal computer communications in general, a technology for high speed delivery of data services to residences and small businesses is emerging. This technology is based on the hybrid fiber-coaxial (HFC) cable infrastructure used to deliver cable television services in metropolitan areas. Such an infrastructure may serve geographic areas ranging from small towns to large metropolitan areas. This size falls between the size of a campus or local area network (LAN) and a public wide area network or (WAN). The term metropolitan area network or MAN has been used to describe networks of this size, regardless of the type of network topology used.

One of the first services offered to subscribers on these MAN's will be IP network access. Subscribers will be able to attach their PC's or other user terminals configured with TCP/IP software to the network via the coaxial cable that feeds their home or business premises. A subscriber can then access any services offered through the system such as on-line services and the Internet. In this environment, the subscriber will need a device such as a cable modem or an adapter which can communicate with the HFC infrastructure. I call this device a "subscriber device." The subscriber's personal computer or terminal will be called the "subscriber terminal." Data will be received and transmitted over the HFC infrastructure to a distribution center, which I call the "head-end." The subscriber device will be connected to the subscriber's personal computer or terminal by a local communication interface.

In an HFC environment, subscribers may be offered different levels of service or levels of access. For example, there may be a basic level that provides access to local content and e-mail, an enhanced level that additionally provides full Internet access and a premium level that provides access to on-line service providers. The network access providers need mechanisms by which they can allow or deny access to these services for individual users as appropriate. It is obviously not possible in this environment to have the level of access depend on geography, since there is no way to predict how many and what different levels of access will be required in a given neighborhood. Ideally, the level of access should be tied to individual subscribers, with a default level of access for each subscriber device.

The current way to provide differing levels of access to different subscribers is the use of packet filtering on a per IP address basis. Since the subscriber network operating over the HFC infrastructure is an IP network, each subscriber terminal has an IP address. An IP address contains two parts: a network or subnet portion, and a host ID. The network or subnet portion is some number of contiguous high-order bits from the address and the host ID is the remaining low order bits. The network or subnet portion determines how routing will occur through the IP network to reach a particular network segment and the host ID then determines the particular machine on that segment. In a current metropolitan area network, the subnet portion corresponds to the geographical location of the user on the subnet.

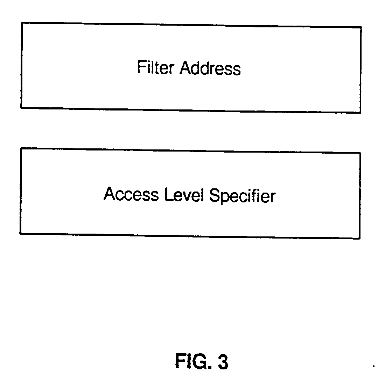

With IP packet filtering, all traffic to and from a given address is restricted until a subscriber is identified and associated with that IP address. Then IP packet filters can be added to the HFC infrastructure, usually to a local router, to provide access to certain resources and deny access to other resources. Figure 3 shows a diagram of a packet filter.

The problem with the IP packet filtering solution is the large number of packet filters that would be required in the network. Each user may require several filters to grant and deny access to the appropriate resources. As an example, consider a network that supplies the following six levels of service: basic service; Internet access; and four premium services. The premium services might be such things as commercial on-line services and corporate work-at-home services. In this case, each user could require six filters to control the level of access to the network so that access to each service is either granted or denied. Since one filter for each service is used, the number per user multiplies as the network offers more services. The filters would likely be installed at router ports. Assuming each router port served 500-1000 users, 3000-6000 filters would be required per port. Since each router is likely to have several ports, the number of filters quickly grows so large that it adversely impacts the performance of the router, and becomes an administrative problem. What is needed is a way to provide a default level of access for each subscriber terminal in the network without using so many filters. The access level control method must also be independent of geography, since users in the same area or even on the same street may require different levels of access.

### Summary

The present invention solves the above identified problem by making use of a portion of the subscriber address in a new way. Typically, the subnet portion of the address represents only the geographical location of the subscriber terminal. In my solution, an analogous portion of the address is used to specify a default level of access. I call this portion of the address the access level portion.

In the same way that the subnet portion of an address is some number of contiguous, high-order bits, the access level portion is also some number of contiguous, high-order bits. The number of bits for the access level portion may be less than, equal to, or more than the number of bits used for the subnet, depending on network configuration and the number of access levels required. Since the access level portion of the address determines the level of access for a subscriber, default filters are put in place for the access levels, not for each subscriber.

In a network employing the invention, each subscriber terminal has an address in which the access level portion determines the default level of access for the terminal. The default filters in the network provide a default level of access to each terminal based on the access level portion. Each subscriber terminal is connected to the network by a subscriber device. At least one hybrid communications line is connected to the subscriber devices and a transport network connects the head-end to the hybrid communications lines. In the preferred embodiment, the transport network and the hybrid communications lines form an asynchronous transfer mode (ATM) network. In the preferred embodiment, the network head-end includes a network access manager, a dynamic host configuration protocol (DHCP) server and a service access gateway, which may all reside in the same machine, or may be connected by an IP network.

A subscriber terminal is assigned an address based on the media access control (MAC) address of the subscriber device. A subscriber terminal may have a permanently assigned default address, but preferably the address is dynamically assigned when the subscriber device joins the network. An adapter or blade in the network sends invitation messages out to subscriber devices to allow them to join the network. When a subscriber device is activated, it searches for an invitation and responds. The head-end will then authorize the device and allow it to join if appropriate. At this point the subscriber terminal requests an IP address if dynamic assignment is being used. The head-end assigns an address with an access level portion which will specify the default level of access for the subscriber. In the case where the subscriber terminal has a permanently assigned address, the access level portion of the permanent address specifies the default level of access. In any case, the subscriber identity is then determined based on subscriber-supplied information such as user ID and password, and exception filters are set up if needed. The network can be configured to automatically authorize all subscriber devices, or each subscriber device can be authorized or not based on the media access control (MAC) information for the subscriber device.

In most cases, the steps outlined above are performed by one or more programmed computers or work stations. Instructions to direct the system to perform these steps are contained in computer readable program code on a computer usable medium. The network access manager function and the DHCP server function are each performed by a workstation which has all the necessary data and programs stored in fixed media. The data includes the subscriber addresses, each with an access level portion.

### Brief Description of the Drawings

FIG. 1 shows a metropolitan area network which uses the present invention.

FIG. 2 shows graphical representations of a subscriber terminal address according to the present invention.

FIG. 3 shows a graphical representation of an access control filter used with the present invention.

FIG. 4 shows a workstation in which the invention can be implemented.

FIG. 5 shows the method by which a network head-end allows a subscriber device with a dynamically assigned address to join the network according to the present invention.

FIG. 6 shows a media on which the instructions that cause a computer to perform the methods of the present invention are embodied.

FIG. 7 shows a block diagram of a subscriber device.

FIG. 8 shows the detailed communication flow between a subscriber and the head-end in a network employing the invention. Figure 8 is divided into Figures 8A and 8B for convenience.

### Detailed Description of the Preferred Embodiments

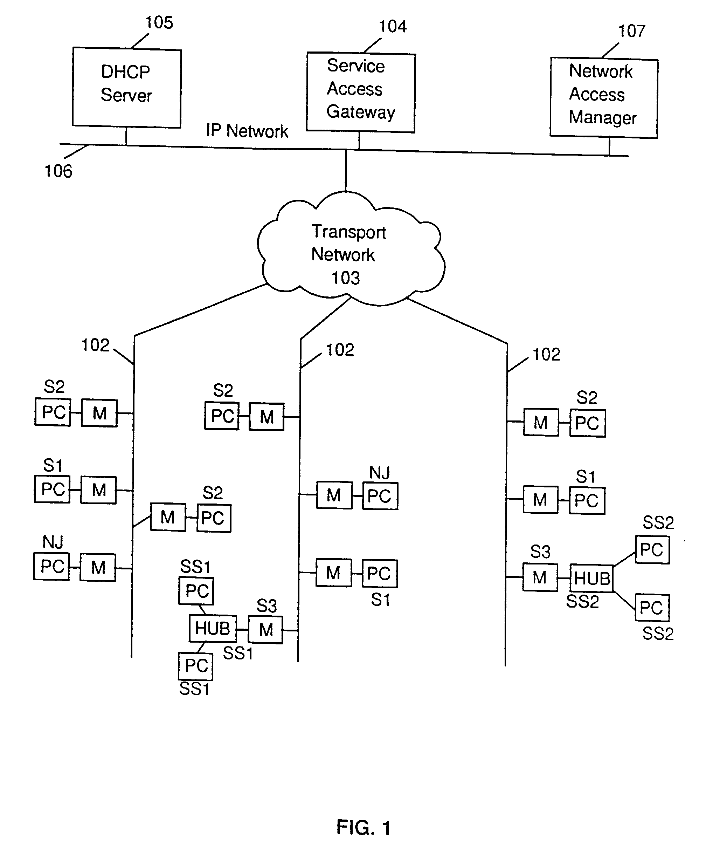

Figure 1 shows a metropolitan area network using the present invention. The network head end includes the dynamic host configuration protocol (DHCP) server 105, service access gateway 104 and network access manager 107. Figure 1 shows these three functions interconnected by an internet protocol (IP) network 106. Each of these functions is actually implemented by a computer readable program. These programs can reside in different machines connected by a network as shown in Figure 1, or they can all reside in one machine.

Each subscriber uses a terminal, usually a personal computer, PC in Figure 1, although there are other types of terminals. Each PC is connected to a hybrid communication line 102 via a subscriber device M. The hybrid communication lines are of the hybrid fiber-coax type and are commonly called HFC lines. The subscriber device is commonly called a cable modem. Each subscriber device has a local communication interface which can either be directly connected to a PC or to a hub. Where the subscriber device is connected to a hub, multiple PC's can also be connected to the hub, so that multiple users can use the same subscriber device for network access. Each subscriber device also has a media access control (MAC) address. The MAC function allows multiple subscriber devices to access the HFC infrastructure in a fair and controlled manner. The MAC function operates like a "traffic cop" and determines which subscriber device can transmit when in an attempt to avoid collisions and loss of data.

A transport network 103 connects the HFC lines 102 to the network head-end. In the preferred embodiment, the transport network and HFC lines form an asynchronous transfer mode (ATM) network and the data is transported between the head-end edge of the transport network and the subscriber devices within ATM cells. In this case, each HFC line is connected to a hybrid fiber-coax (HFC) port on an HFC blade within a switch in the transport network. Any type of transport network structure can be used in a metropolitan area network employing the invention; therefore, the details of the transport network are not shown. In the preferred embodiment however, the data moving between the network head-end and the subscriber terminals is exchanged in TCP/IP format. This data is in ATM cells only between the head-end edge of the transport network and the subscriber devices. Each subscriber terminal has a TCP/IP stack installed, and the address for each subscriber terminal is an IP address. Using TCP/IP allows the subscribers to take advantage of TCP/IP applications which are readily available. The TCP/IP data is transported over ATM virtual circuits which are treated as point-to-point links between IP stations and routers.

In the preferred embodiment, the network head-end components function as follows. The network access manager 107 of Figure 1 contains a database to identify valid subscriber devices based on their MAC addresses. This database can be used to authorize subscriber devices and terminals to join the network, or the network access manager can simply authorize any device to join with some minimum level of access. The network access manager also maintains other addresses that are associated with each subscriber device or its connected subscriber terminal such as an IP address and ATM address. All these parameters can change each time a user accesses the system, so the network access manager keeps track of which IP addresses have been associated with which subscriber device and which device each subscriber terminal has logged in from.

The DHCP server 105 of Figure 1 will receive DHCP messages from the HFC blades acting as relay agents. The DHCP server will access the network access manager database to determine the default level of access that should be given to a device. The DHCP server will then assign an IP address having an access level portion specifying the default level of access for the subscriber terminal when it joins the network, unless an address has been previously, permanently assigned to the subscriber device.

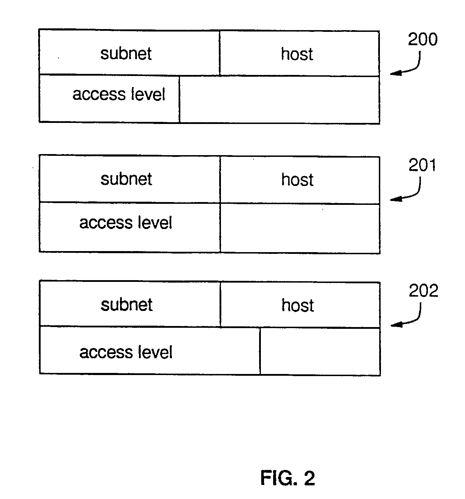

In any case, the address assigned to a subscriber terminal according to the invention is of the form shown in Figure 2, with an access level portion and a host ID. The IP address will also have a subnet portion. In this case, the access level portion can use the same bits as the subnet portion as in 201, fewer bits than the subnet portion as in 200 or more bits than the subnet portion as in 202. In the simplest case, the access level portion is the same as the subnet portion and that portion of the address no longer determines the geographical location of subscribers, but only their default level of access. In this case, the DHCP server has a configuration file which defines certain subnets to have certain levels of access.

The levels of access are physically controlled in the preferred embodiment by installing access control filters at routers in the transport network. An access control filter is shown in Figure 3. All IP packets that come from the subscriber terminal will flow through the router and as they do, they will be tested against the filter list installed at the router. When the first match of a filter is found for a given IP packet, that filter determines whether the packet is allowed to pass through and be forwarded on through the network or whether the packet is dropped at the router and denied further transport. These filters installed at the routers can use any of the information in the IP packet header to match IP packets, but in the preferred embodiment the source and destination IP addresses are used. If the source address in an IP packet matches the access level portion of the filter address, and the destination also matches that specified in the filter, then the filter action, either permit or deny, is applied. In this way, one filter can be installed to permit or deny traffic to a given range of addresses for the group of subscribers whose access level portion of the source IP address are all the same.

The service access gateway 104 of Figure 1 prompts the user for information so that the specific user or human subscriber can be identified. This normally includes a user ID and password. Once the user is identified the service access gateway sends a message to the network access manager informing it of who the user is and what IP address they are using. If the default level of access is not correct for this user, an exception filter can be set up on the network to handle the level of access for this user in the same way as in the prior art.

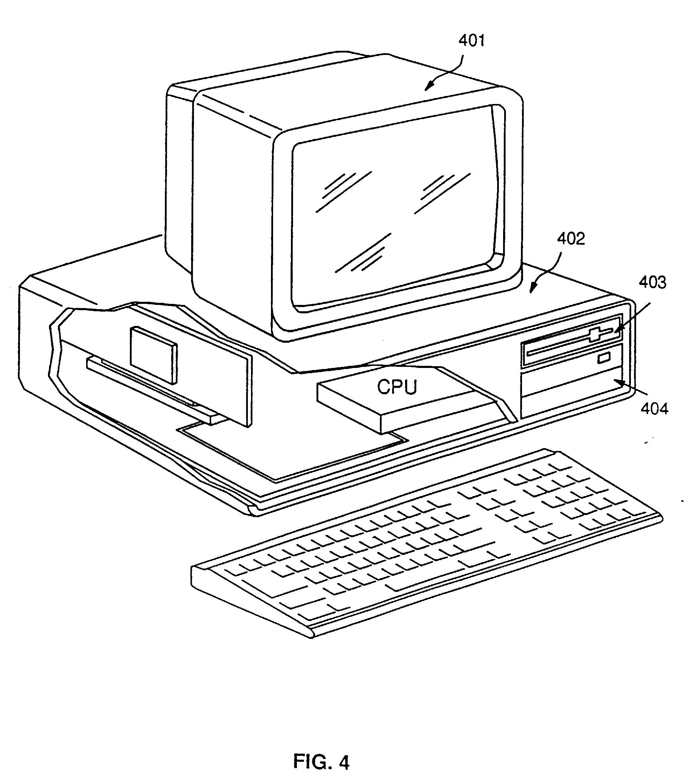

The various functional units in the head-end are implemented in software installed in a workstation. Figure 4 shows such a workstation. The workstation includes a display device 401 and a system unit 402. The system unit houses the central processing unit or CPU. The workstation contains a removable media unit 403 and a fixed media unit 404. In one embodiment the removable media unit is a diskette drive or a CD-ROM drive and the fixed media unit is a fixed disk drive. In the case of the network access manager and the DHCP server, the workstation fixed media unit contains the data needed to perform the various functions required by the invention, including IP addresses, each of which has an access level portion and a host ID according to the invention.

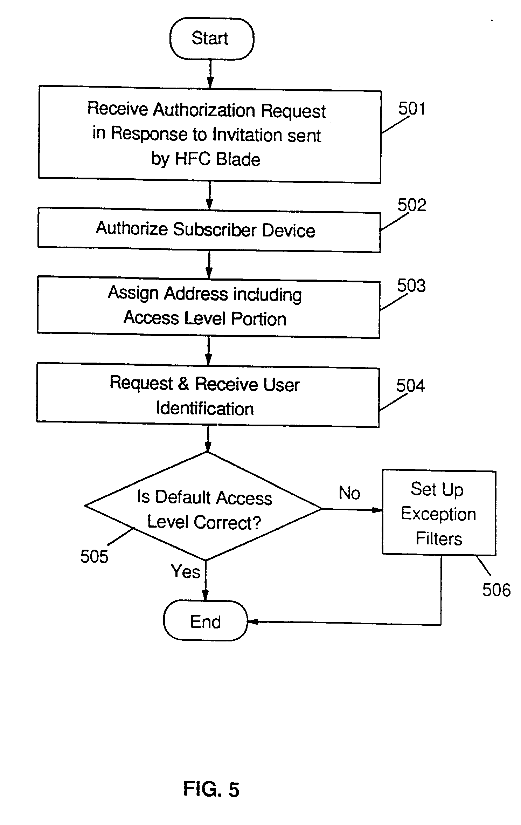

Figure 5 shows how a subscriber device joins the network when the address is dynamically assigned to the subscriber device. This process is managed by the network access manager. An HFC blade sends an invitation for subscriber devices to join the network. At 501 an authorization request is received by the head-end in response to the invitation. The subscriber device is then authorized at 502. Depending on how the network is managed, this may not be a true authorization but simply a transmission of required information if the network is allowing any device to join. If the network is restricted to only certain devices, this authorization will be made based on the MAC information for the subscriber device. An IP address is assigned to the subscriber terminal through the subscriber device at 503. The address includes an access level portion which determines the default level of access to the network. Subscriber identity is determined at 504 based on subscriber-supplied information. A determination is made at 505 as to whether the default level of access is appropriate. If it is not, an exception filter is set up at 506. Otherwise the process is complete.

In the case where the an address is permanently assigned, the subscriber device joins the network in response to an invitation, but no address is assigned by the network head-end. Instead, the access level portion of the already assigned address simply sets the default level of access for the user. Exception filters are put in place if necessary, once the specific user identity is determined.

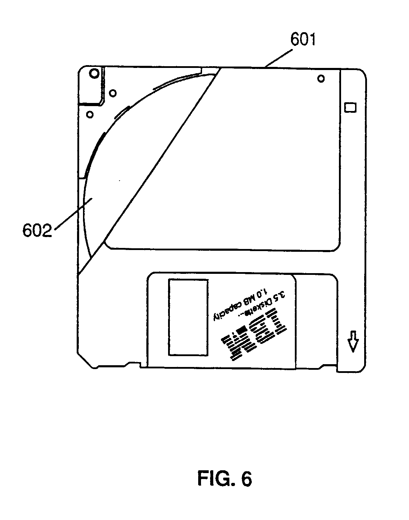

The steps of the invention are performed under the direction of a computer program product consisting of a computer usable medium with a computer program product embodied on the medium. The computer program can be installed on a workstation by inserting the medium in the removable media device of Figure 4. An example of such a medium is shown in FIG. 6. The medium of FIG. 6 consists of a protective jacket 601 which holds a magnetic disk 602. The computer program instructions are recorded on the magnetic disk. This type of medium is commonly called a diskette. The computer program product can be on other types of media, such as tape, CD-ROM, or computer memory. The diskette is shown as an example.

A network with a head-end operating as described above using the present invention greatly reduces the need for filters even though the head-end does not initially know which human subscriber is accessing the network. The level of access should ultimately be tied to individual subscribers, not to subscriber devices. Thus exception filters are sometimes needed, but the need for filters is greatly reduced. For example, if two members of a household have accounts and one has an "A" level of access and the other has a "B" level of access, the default can be set to one or the other, and exception filters would only be needed fifty percent of the time. The number of exception filters can be reduced even further by making the initial guess of which access level to assign more intelligent than just assuming a default level of access. Subscriber usage characteristics can be used to control the assignment of access levels. For example, a history of user log-ins for each device can be maintained. Therefore, the network access manager would know what level of access is used most often. The usage could also be correlated to the time of day. For example, the network access manager may "know" that during the day a child account in a household is most often used and during the evening a parental account is most often used. Overall, the total number of filters required in the network will always be significantly less than if they were installed on an address by address basis at all times. Additionally, the invention is transparent to subscriber devices and subscriber terminals, allowing the same user-end hardware to be used with the invention as was used in a prior-art network.

Having described a network head-end and infrastructure which uses subnets for access level control, I now describe the subscriber device which is used with such a network. The subscriber device is usually a modem. If the network is operating over the cable TV system the device is called a cable modem. In the preferred embodiment, the modem is controlled by a microprocessor under the control of a computer program. While the program can be embodied on any media, it is normally embodied in a computer memory inside the modem.

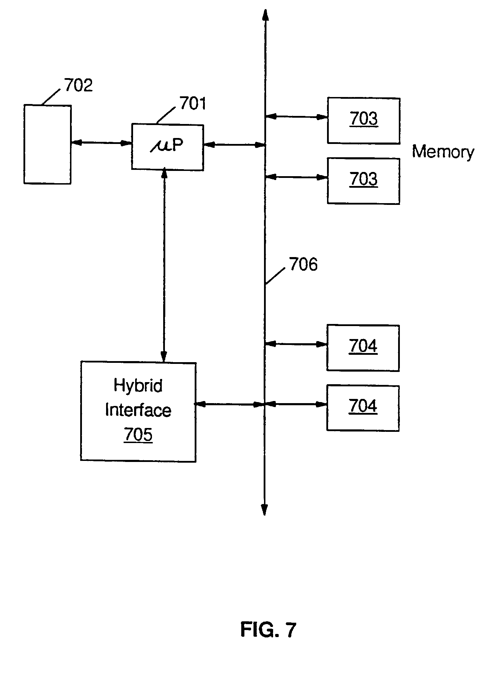

FIG. 7 is a functional block diagram of the subscriber device. An internal bus 706 communicates messages and data between the various components of the subscriber device. Modules 703 are computer memory modules which contain, among other data, the computer readable program code to implement the operation of the modem. Modules 704 are specialized communication protocol circuits that provide functions such as media access control (MAC) and ATM functions, if the network formed by the HFC lines and the transport network is an ATM network. A hybrid interface 705 contains a modulator and demodulator and directly interfaces with the network to exchange data over the network. A local communication interface 702 sends and receives information to the subscriber terminal or a hub if there are multiple user terminals. The information flow is controlled by a microprocessor or microcontroller 701.

The subscriber device can be a stand-alone unit, with its own cabinet and power supply. In this case the local communication interface 702 is preferably an Ethernet interface. The Ethernet interface can be simply connected to a subscriber terminal such as a personal computer, or if desired, can be connected to an Ethernet hub so that multiple terminals can be served by one subscriber device. Other types of serial or parallel interfaces can be used. It is also possible to build the subscriber device on an adapter card in which case the local communication interface is a bus connector for a personal computer. In this case the modem would receive power through the bus connector and would not require power supply.

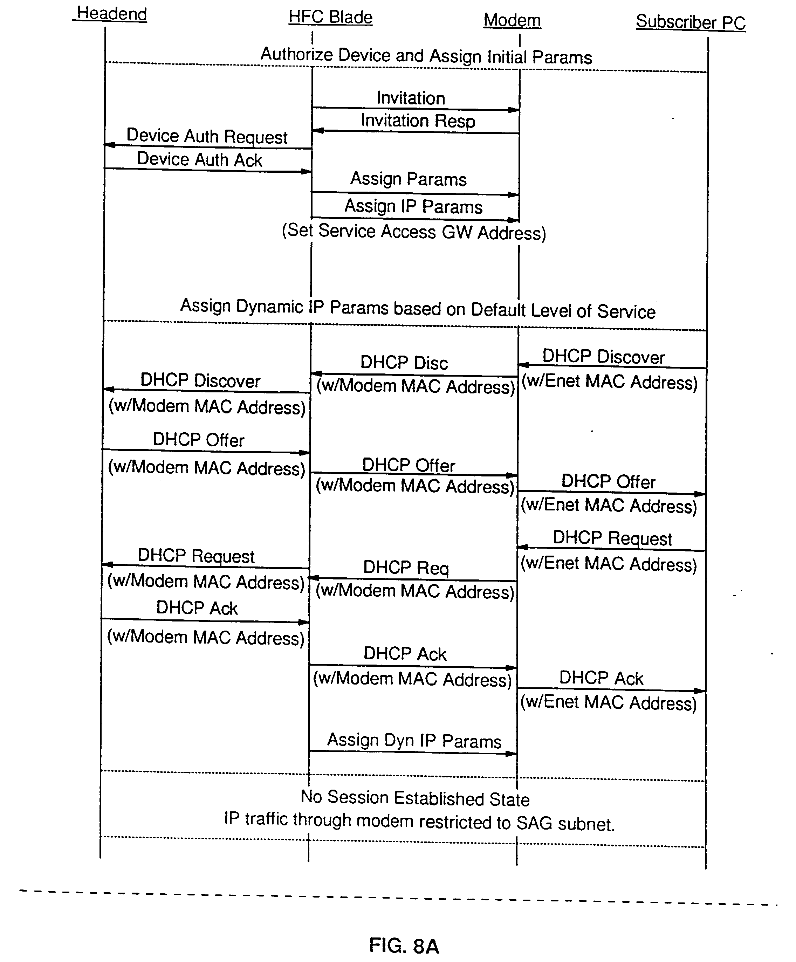

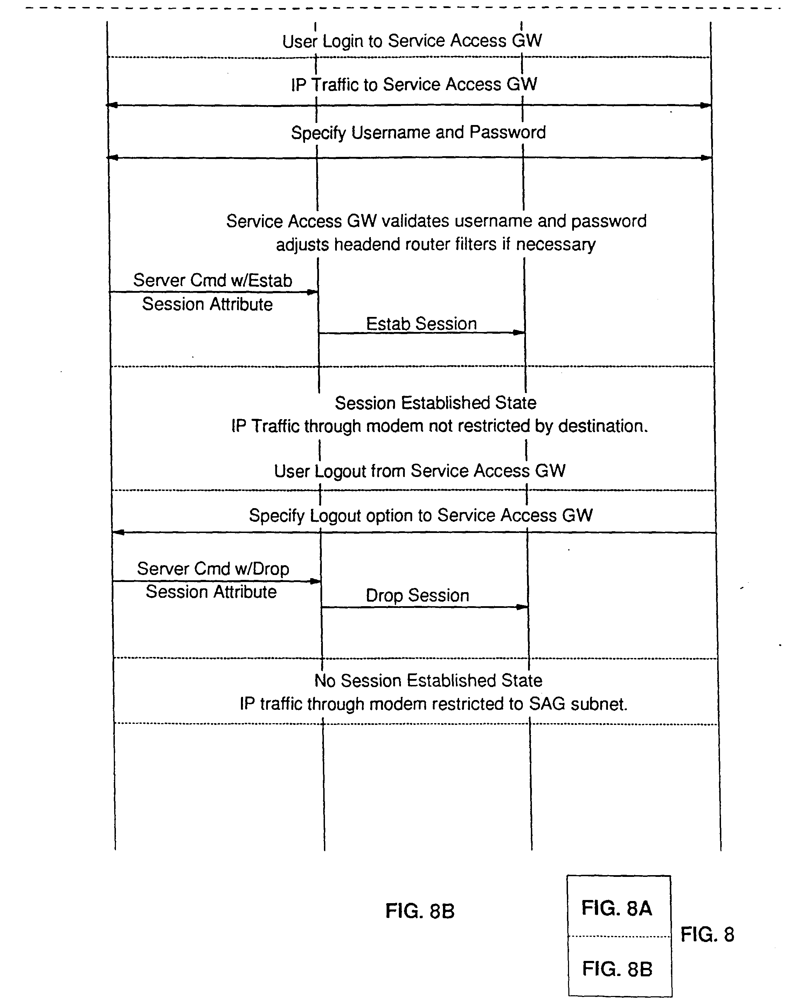

Turning to FIG. 1 and FIG. 8, the network infrastructure and the subscriber devices work together as follows. Figure 1 has labels to show the status of the various subscriber devices at a given point in time. A device marked NJ is not joined to the network. A device marked S1 is on subnet 1, S2 is on subnet 2 and S3 is on subnet. The PC's are the subscriber terminals. Each PC has an Ethernet card installed through which the connection is made either to a hub or to the local communication interface of a modem. PC's connected to a hub represent subscriber locations with multiple PC's. For purposes of this embodiment, the access level portion of an address is the subnet portion. In this environment, these PC's may be on a separate logical subnet of their own represented by SS1 (subscriber subnet 1), and SS2 (subscriber subnet 2). These separate subscriber subnets are then connected to the larger general subnets through the subscriber device, which acts as a simplified router, existing on both subnets.

The subnet portion of the IP address determines routing through the network. When IP packets reach routers at the edge of the transport network, the routers make a decision on how to handle the packets based on the subnet portion of the destination address. If the router can communicate directly with the specified subnet, it will send the packet directly to the subscriber terminal. This would be the case for any of the subnets S1, S2 or S3. If however, the router is not directly on the specified subnet, as would be the case for the subscriber subnets SS1 and SS2, the router will have routing tables set up to tell it to forward the packet to the particular subscriber device/modem that is attached or is at least closer to the intended subnet. In our environment, this will be a modem that is attached to both an Sn subnet and the desired SSm subnet.

FIG. 8 shows the detailed flow of messages between the subscriber terminal and the other components of the network during a network session. The HFC blades send out invitations to the subscriber devices on a regular basis and any subscriber device wishing to join the network will respond with an invitation response. The invitation response causes an authorization request to be sent to the network access manager (NAM). The NAM will respond with either permission granted or denied, and all startup parameters required if access is granted. If access is granted, the HFC blade then sends these startup parameters to the subscriber device in "assign params" and "assign IP params" messages and the device is then joined to the network.

If the subscriber terminal is configured to receive IP address dynamically, it will then generate DHCP messages which will flow through the HFC blade to the DHCP server in the head-end. Note that the MAC address in the DHCP messages may be replaced by the subscriber device so that the IP address will be assigned based on the MAC address of the subscriber device, not the MAC address of the Ethernet card in the subscriber terminal. The responses will pass back in the opposite direction and the subscriber terminal will thus be configured with an IP address. Also note that if the MAC address was replaced by the subscriber device, the original address will be restored before the response is returned to the subscriber terminal. The DHCP messages shown are defined by the DHCP protocol.

After the subscriber device has been joined to the network and the IP address has been assigned, statically or dynamically, the subscriber's IP traffic will be restricted to the service access gateway (SAG). Users can then send a user name and password to the SAG to identify themselves. The SAG will validate a user and exception filters will be added to the routers if necessary. The SAG then sends a message down to the subscriber device, via the NAM, to lift the restriction of IP traffic to the SAG. At this point, the user traffic will only be restricted by the filters in the routers. When a user logs out, the SAG again sends a message down to the subscriber device, via the NAM, telling it to again restrict traffic to the SAG until the next user logs in, causing the process to be repeated.

## Claims

1. A metropolitan area network comprising:
a plurality of subscriber terminals, each subscriber terminal having an address including an access level portion, where the access level portion determines a default level of access for the subscriber terminal;
a plurality of subscriber devices connected to the subscriber terminals;
at least one hybrid communications line connected to the plurality of subscriber devices;
a head-end for communicating with the subscriber terminals and for providing a default level of access to each subscriber terminal in accordance with the access level portion contained in the address for the subscriber terminal; and
a transport network disposed between the hybrid communications line and the head-end.

2. The metropolitan area network of claim 1 wherein the head-end further comprises:
a network access manager for identifying subscriber devices and granting network access to subscriber terminals based on media access control information for the subscriber devices;
a dynamic host configuration protocol (DHCP) server for assigning addresses to subscriber terminals; and
a service access gateway for identifying subscribers using subscriber input.

3. The metropolitan area network of claim 2 wherein the network access manager, the DHCP server, and the service access gateway are connected by an internet protocol network.

4. The metropolitan area network according to any of claims 1 through 3 wherein the transport network and hybrid communications lines form an asynchronous transfer mode (ATM) network.

5. The metropolitan area network according to any of claims 1 to 4 wherein the head-end is a network head-end comprising:
a network access manager for identifying subscriber devices and granting subscriber terminals network access;
a dynamic host configuration protocol (DHCP) server for assigning addresses to subscriber terminals, an address containing an access level portion wherein the access level portion determines a default level of access for a subscriber, the DHCP server connected to the network access manager; and
a service access gateway for identifying subscribers using subscriber input, the service access gateway connected to the DHCP server and the network access manager.

6. The network head-end of claim 5 wherein the network access manager, the DHCP server, and the service access gateway are all interconnected by an internet protocol network.

7. The network head-end according to claim 5 or claim 6 wherein access to the subscriber is granted or denied based on the media access control (MAC) information for the subscriber device.

8. The metropolitan area network according to any of claims 2 to 7 wherein the network access manager comprises:
a display device;
a computer system unit connected to the display device wherein the computer system unit includes a CPU, a removable media unit; and a fixed media unit, the fixed media unit having addresses embodied thereon wherein each address comprises:
an access level portion, the access level portion for determining a default level of access for the subscriber terminal to which the address is assigned; and
a host identifier (host ID) for further specifying the subscriber terminal.

9. The metropolitan area network according to any of claims 2 to 8 wherein the dynamic host configuration protocol (DHCP) server comprises:
a display device;
a computer system unit connected to the display device wherein the computer system unit includes a CPU, a removable media unit; and a fixed media unit, the fixed media unit having addresses embodied thereon wherein each address comprises:
an access level portion, the access level portion for determining a default level of access for the subscriber terminal to which the address is assigned; and
a host identifier (host ID) for further specifying the subscriber terminal.

10. A method of joining a subscriber terminal to a network, the method comprising the steps of:
receiving an authorization request in response to an invitation;
authorizing a subscriber terminal;
assigning an address to a subscriber, the address including an access level portion, the access level portion determining a default level of access for subscribers using the subscriber device;
determining a subscriber identity based on subscriber-supplied information;
determining, based on the subscriber identity, if the default level of access is correct; and
setting up an exception filter for the subscriber if the default level of access is not correct.

11. The method of claim 10 wherein the address is assigned to the subscriber based on subscriber usage characteristics.

12. The method according to claim 10 or claim 11 wherein the subscriber terminal is authorized based on media access control (MAC) information for the subscriber device.

13. Apparatus for joining a subscriber terminal to a network, the apparatus comprising means for performing the steps according to any of claims 10 to 12.

14. A computer program product comprising a computer usable medium having a computer readable program embodied therein for causing the joining of a subscriber terminal to a network, the computer readable program further comprising:
computer readable program code for causing a computer to effect the receiving of an authorization request;
computer readable program code for causing a computer to effect the authorizing of a subscriber terminal connected to the subscriber device;
computer readable program code for causing a computer to effect the assigning of an address to a subscriber, the address including an access level portion, the access level portion determining a default level of access for subscribers using the subscriber device;
computer readable program code for causing a computer to effect the determining of a subscriber identity based on subscriber-supplied information;
computer readable program code for causing a computer to effect the determining, based on the subscriber identity, if the default level of access is correct; and
computer readable program code for causing a computer to effect the setting up of an exception filter for the subscriber if the default level of access is not correct.

15. The computer program product of claim 14 wherein the address is assigned to the subscriber based on subscriber usage characteristics.

16. The computer program product according to claim 14 or claim 15 wherein the subscriber terminal is authorized based on media access control (MAC) information for the subscriber device.
